# EUROPEAN PATENT APPLICATION

(11) **EP 1 031 796 A2**
(43) Date of publication of application: **30.08.2000**
(21) Application number: 99500160.9
(22) Date of filing: 13.09.1999
(51) Int. Cl.: F24D 13/02

(54) **Improved electric heater**

(30) Priority: 24.02.1999 ES 9900494 U
(71) Applicant: Heating Elements I.Z., S.L., 46131 Bonrepos (Valencia) (ES)
(72) Inventor: Llana Garcia, Pedro, 46131 Bonrepos (ES)
(74) Representative: Isern-Cuyas, Maria Luisa

(57) **Abstract**

Improved electric heater of the type consisting of an enveloping shell (2), provided with a thermostat (3) and an internal conventional solar panel (4) of variable power, characterized by the fact that it includes a porcelaneous stoneware panel (5), receiver of the heat generated by the conventional solar panel (4), that is located on the enveloping shell (2), carrier of the thermostat (3), covering the solar panel (4). The regulating thermostat (3) has a probe that detects the temperature received by the porcelanous stoneware panel (5) (figure 2).

## Description

### PURPOSE

The purpose of this request for invention is an improved electric heater, the aim of which is based on designing a heater that has the basic characteristic of operating by radiation, convection and accumulation. This combination of possibilities forms a very strong heater with high density and esthetic forms, creating a unique means of heating in accordance with its low installation cost, reduced consumption and fast response. The heat is totally ecological and may present an external form as regards its ornamentation, which is completely variable, and includes as a totally innovative component porcelaneous stoneware plates.

### SCOPE

This invention can be applied in the industry dedicated to the manufacture of electric heaters.

### HISTORY

At present and as a reference to the state-of-the-art, it should be mentioned that the existence of several electric heaters that use water, oil and even direct working resistance as heat generating elements is known.

Likewise, the existence of electric heaters that operate by means of the convection system is also known, as well as the existence to day of a large number of heaters provided with accumulation means, in order to substantially reduce the cost of the power used to obtain heat when using the heater.

However, there is no knowledge of the existence today of an invention that has the quality of permitting its operation by radiation, generating the heat by convection towards the exterior and, at the same time, forming itself as a component able to carry out the corresponding heat accumulation, which is transmitted to the exterior by radiation once the radiator stops operating as regards the power consumption. The stored heat is transmitted by radiation to the exterior onto a porcelaneous stoneware plate that, when the accumulated heat is substantially reduced and is unable to operate by radiation, its temperature is verified by means of a thermostat which automatically puts the heater into operation by convection and, thus, slowly reheats the porcelaneous stoneware plate until the suitable temperature is obtained that causes disconnection of the conventional heater.

There is no knowledge, at present, of the existence of an ideal invention which has the above mentioned characteristics.

### DESCRIPTION OF THE INVENTION

The improved electric heater purpose of this invention is formed as a device able to be used generally as an electric heater that generates heat to the exterior by convection, and presents in its context an accumulating plate which, once operation of the convector heater has been stopped, actuates as a heater that operates based on the heat accumulated on the porcelaneous stoneware plate, working really as a normal heater by radiation.

More specifically, the improved electric heater purpose of this invention is composed of an enveloping shell that works as a chassis or frame in which the conventional solar panel of variable power, as well as a regulating thermostat, is attached. A porcelaneous stoneware panel that may have a different shape and ornamentation is included on the front part of the shell.

The heater is turned on by pressing the corresponding button or switch and operates normally until the thermostat included therein and a conventional probe record that the porcelaneous stoneware panel has an ideal temperature in accordance with the temperature indicated on the thermostat. The heater then automatically stops its consumption of electric power, that is, it stops working as a convector heater and operates solely and exclusively due to radiation, thanks to the thermal inertia of the porcelaneous stoneware panel that provides, approximately, a similar heating performance without consumption and, at the same time, it continues connected to obtain the suitable temperature on the panel.

To complement the description which follows and in order to help with a better understanding of its characteristics, this descriptive report includes a set of drawings the figures of which, in an illustrative and unlimited way, represent the most significant details of the invention.

### BRIEF DESCRIPTION OF THE FIGURES

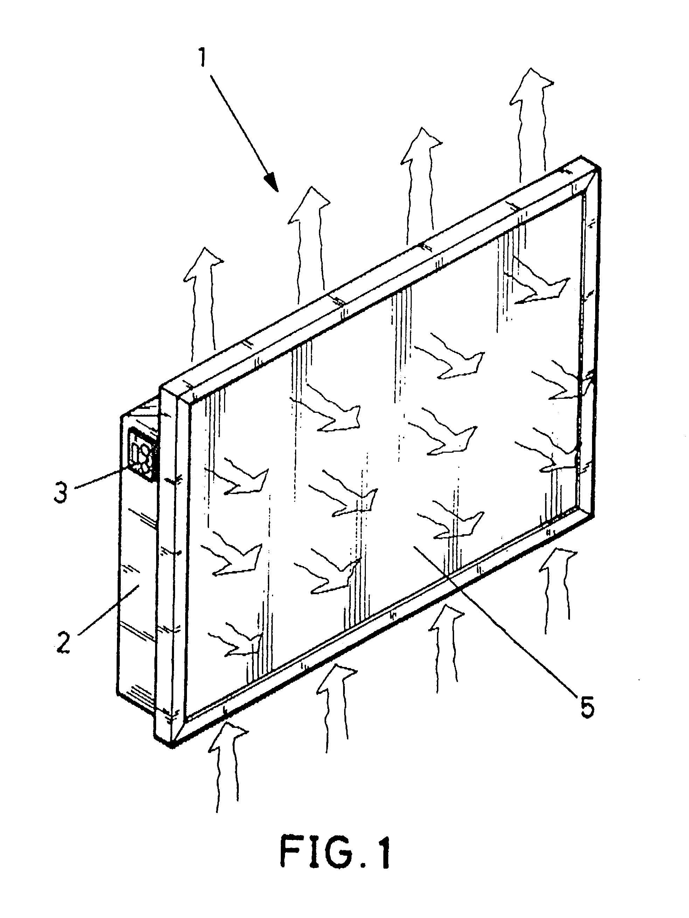

Figure 1 shows a perspective view of the purpose of the invention relating to an improved electric heater seen from the front part of the area.

Figure 2 shows a perspective view of the different parts of which the invention shown mounted in figure 1 is composed.

### DESCRIPTION OF A PREFERRED PERFORMANCE OF THE INVENTION

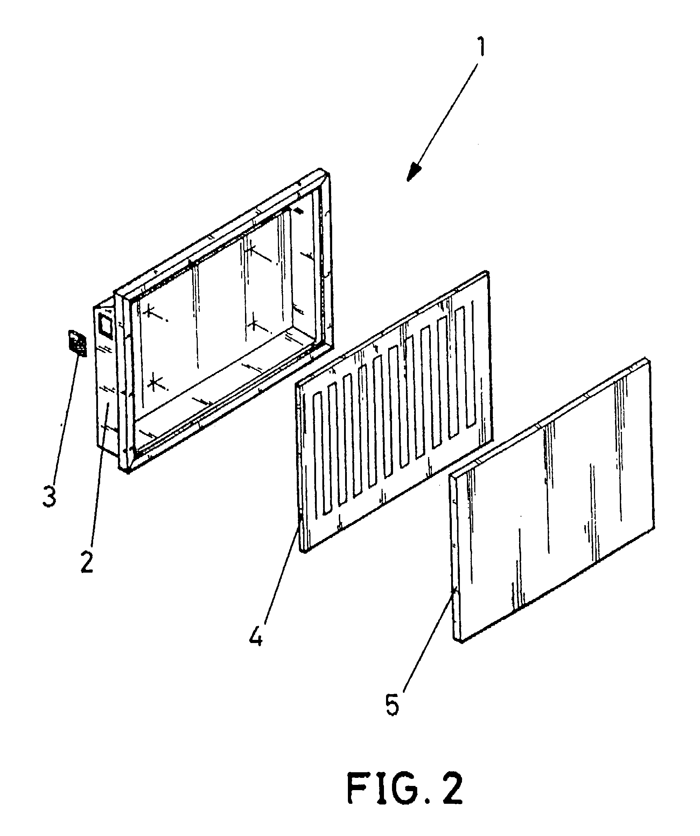

In view of the above figures and in accordance with their numbering, it can be seen how the improved electric heater (1) is composed of an enveloping shell (2) consisting of a chassis or frame of the heater (1) itself, on which a regulating thermostat (3) is attached. This is provided with a corresponding probe that verifies the temperature indicated on the thermostat (3) as well as the temperature accumulated on a porcelanous stoneware panel (5), located on the conventional solar panel (4) represented in figure 2. The porcelanous stoneware panel (5) receives the heat emanating from this solar panel (4) and the automatic stopping of said solar panel (4) generates the accumulation obtained in the porcelaneous stoneware panel (4), based on the temperature detected by the thermostat (3) fastened to the structure of the enveloping shell (2).

During the time that the solar panel (4), regulated by the thermostat (3), is not working, the heater (1) operates by heat radiation to the exterior that emanates from the porcelaneous stoneware panel (5). The conventional solar panel (4) comes into operation when the thermostat (3) detects a significant reduction in the temperature of the porcelaneous stoneware panel (3) and the heater once again works as a convector heater.

Logically, the porcelaneous stoneware panel (3) can have many shapes and ornamentation, as well as decorative forms and shades.

It is not considered necessary to extend this description so that any expert on the subject understands the scope of the invention and its advantages.

## Claims

1. IMPROVED ELECTRIC HEATER of the type consisting of an enveloping shell (2), provided with a thermostat (3) and an internal conventional solar panel (4) of variable power, characterized by the fact that the enveloping shell (2) that includes the thermostat (3) has a porcelaneous stoneware panel (5) that covers the solar panel (4) and receives the heat generated by the conventional solar panel (4).

2. IMPROVED ELECTRIC HEATER, according to claim 1, characterized by the fact that the regulating thermostat (3) has a probe that detects the temperature received by the porcelaneous stoneware panel (5).
